(19) **Europäisches Patentamt European Patent Office Office européen des brevets**

(11) **EP 3 061 009 B1**

(12) **EUROPEAN PATENT SPECIFICATION**

(45) Date of publication and mention
of the grant of the patent:
**17.02.2021 Bulletin 2021/07**

(21) Application number: **14855737.4**

(22) Date of filing: **15.10.2014**

(51) Int Cl.:
**G06F 16/2455** (2019.01)     **G06F 16/245** (2019.01)

(86) International application number:
**PCT/IB2014/065332**

(87) International publication number:
**WO 2015/059605 (30.04.2015 Gazette 2015/17)**

(54) **WINDOW MANAGEMENT FOR STREAM PROCESSING AND STREAM REASONING**

FENSTERVERWALTUNG ZUR STREAM-VERARBEITUNG UND STREAM-LENKUNG

GESTION DE FENÊTRE DE TRAITEMENT DE FLUX ET DE RAISONNEMENT DE FLUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2013 IN 3302MU2013**

(43) Date of publication of application:
**31.08.2016 Bulletin 2016/35**

(73) Proprietor: **Tata Consultancy Services Limited
Mumbai, Maharashtra 400021 (IN)**

(72) Inventors:
• **BANERJEE, Snehasis
West Bengal
Kolkata 700091 (IN)**
• **MUKHERJEE, Debnath
West Bengal
Kolkata 700091 (IN)**

(74) Representative: **Goddar, Heinz J.
Boehmert & Boehmert
Anwaltspartnerschaft mbB
Pettenkoferstrasse 22
80336 München (DE)**

(56) References cited:
EP-A1- 2 275 954     EP-A2- 2 474 922
US-A1- 2007 005 795     US-A1- 2008 177 726
US-A1- 2008 209 048     US-A1- 2011 078 145
US-A1- 2013 024 442     US-A1- 2013 091 199

**Description**

PRIORITY INFORMATION

This patent application takes priority from 3302/MUM/2013.

TECHNICAL FIELD

The present disclosure described herein, in general, relates to a system and a method for a database management system, more particularly to the system and the method for providing data for resolving a query in the database management system.

BACKGROUND

In today's world, computing systems are capable of generating data at a faster pace. However, the computing systems may not be able to process the data at similar pace. It may be understood that, there are basically three types of data i.e. static data, slowly changing data and dynamic data. The static data indicates the data that does not change whereas the slowly changing data indicates the data that may change after a pre-defined time interval. The dynamic data, on the other hand, indicates the data that may continuously be generated as a data stream. Since the data is dynamic, the data may change after each instance of time interval. One example of the dynamic data is the data that may be received from a plurality of sensors deployed across one or more geographical locations. The plurality of sensors may include a humidity sensor, a fire detection sensor, and a temperature sensor. In one aspect, the plurality of sensors may capture the data in continuous manner and further transmit the data captured for processing to the other computing systems.

In order to process the dynamic data, Data Stream Management System (DSMS) has evolved, where continuous registered queries are executed on a window i.e. (a snapshot of the data stream). However, traditional DSMS lack the capability of semantic reasoning on the dynamic data to infer insights/data analytics, and hence lead to the introduction of Stream Reasoning (SR) in the DSMS. In addition to the continuous registered queries, there are various instances wherein, a user may execute an ad-hoc query or a dynamic query on the window based on the dynamic change in application requirements. In such instances, the ad-hoc query or the dynamic query executed on the window may provide erroneous results. It may be understood that, the erroneous results may be provided because of the limited size of the window. In one example, consider the size of the window is 1000 tuples. Then, based on the change in the logic of the continuous registered query, the size of the window may be changed from 1000 tuples to 2000 tuples. In such a scenario, either the continuous registered query evaluation has to be stopped until the window gets filled with new 1000 tuples, or execution will continue with missing few of relevant dataset of the data that may lead to the erroneous results.

Therefore, there exists a challenge of appropriate selection of size of the window in order to process the continuous registered query and/or ad-hoc queries. In addition, since the dynamic data may be continuously generated by the plurality of sensors, there exist a further challenge to identify appropriate sub-sets of the data that needs to be included in the window for the processing of the dynamic and/or ad-hoc queries in order to derive statistical inferences.

Document EP 2275954 A1 discloses that a Data stream query mediation may utilize a query handler configured to receive a query from a stream application to be applied against a stream of data including multiple tuples representing events. A stream window manager may be configured to express the query in a specification which defines a window including a subset of the tuples, the specification defining content of the window as a range of the tuples having a range attribute over which the content is specified, defining when to update the window using a synchronization attribute specifying a movement of the window over time with respect to the content, and defining an evaluation of the content of the window using an evaluation attribute specifying when to perform the evaluation. A query translator may be configured to translate the query including mapping the range attribute, the synchronization attribute, and the evaluation attribute to a stream processing language of a data stream management system (DSMS), to thereby obtain a translated query. A DSMS mediator may be configured to provide the translated query to the DSMS for processing therewith.

Document EP 2474922 A2 discloses techniques for user feedback driven dynamic query rewriting in complex event processing (CEP) environments. In certain example embodiments, the adjustment of already-initiated queries may be permitted during runtime in order to help continuously or substantially continuously meet a user's requirements. In certain example embodiments, parameters of a query may be adapted dynamically, e.g., without the need to redeploy it. Adaptable parameters in certain example embodiments may be identified and/or based on, for instance, an automatic determination from original query creation, user specifications, the way in which a user interacts with a user interface for visualizing the results of queries, etc.

SUMMARY

Before the present systems and methods, are described, it is to be understood that this application is not limited to the particular systems, and methodologies described, as there can be multiple possible embodiments which are not expressly illustrated in the present disclosures. It is also to be understood that the terminology used in the description is for the purpose of describing the particular versions or embodiments only, and is not intended to limit the scope of the present application. This summary is provided to introduce concepts related to systems and methods for providing data required for resolving a query and the concepts are further described below in the detailed description. This summary is not intended to identify essential features of the disclosure nor is it intended for use in determining or limiting the scope of the disclosure.

In one implementation, a system and method for providing data required for resolving a query is disclosed. In one aspect, the system may comprise a processor and a memory coupled to the processor for executing a plurality of modules present in the memory. The plurality of modules may further comprise a data receiving module, a logic manager module, a window manager module, a learning module, and a data facilitating module. The data receiving module may be configured to receive a dataset captured by a plurality of sensors. The dataset may be captured based on a pre-defined set of rules. The logic manager module may be configured create a space for storing the dataset in a window of a plurality of windows by removing pre-stored data from the window. In one aspect, the pre-stored data may be removed on arrival of the dataset. In one aspect, the pre-stored data may be stored in a repository post removal from the window. The logic manager module may further be configured to receive the query from a user. It may be understood that, the query may be one of a registered query and an ad-hoc query. The window manager module may be configured to determine the data based upon the query. The data may comprise the dataset and a part of the pre-stored data or the pre-stored data. The window manager module may further be configured to resize the window based on the data to merge the part of the pre-stored data or the pre-stored data with the dataset, thereby generating a resized window. It may be understood that, the window may be resized when the query is the registered query. The learning module may be configured to select a maximum size window having a maximum size amongst the plurality of windows. The maximum size window may be selected when the query is the ad-hoc query. The data facilitating module may be configured to provide the data in one of the resized window and the maximum size window in order to resolve the query.

In another implementation, a method for providing data required for resolving a query. In one aspect, a dataset captured by a plurality of sensors may be received. The dataset may be received based on a pre-defined set of rules. After receiving the dataset, a space for storing the dataset in a window of a plurality of windows may be created by removing pre-stored data from the window. The pre-stored data may be removed on arrival of the dataset. In one aspect, the pre-stored data may be stored in a repository post removal from the window. Subsequent to the creation of the space, the query from a user may be received. It may be understood that, the query may be one of a registered query and an ad-hoc query. After receiving the query, the data based upon the query may be determined. The data may comprise the dataset and a part of the pre-stored data or the pre-stored data. In one aspect, the window may be resized based on the data in order to merge the part of the pre-stored data or the pre-stored data with the dataset, thereby generating a resized window. It may be understood that, the window may be resized when the query is the registered query. In another aspect, a maximum size window having a maximum size amongst the plurality of windows may be selected. The maximum size window may be selected when the query is the ad-hoc query. Based on the query, the data may be provided in one of the resized window and the maximum size window in order to resolve the query. In one aspect, the method is performed by a processor using programmed instructions stored in a memory.

In yet another implementation, non-transitory computer readable medium embodying a program executable in a computing device for providing data required for resolving a query is disclosed. The program may comprise a program code for receiving a dataset captured by a plurality of sensors. The dataset may be received based on a pre-defined set of rules. The program code for creating a space for storing the dataset in a window of a plurality of windows by removing pre-stored data from the window. The pre-stored data may be removed on arrival of the dataset. In one aspect, the pre-stored data may be stored in a repository post removal from the window. There is a program code for receiving the query from a user. It may be understood that, the query may be one of a registered query and an ad-hoc query. The program code for determining the data based upon the query. The data may comprise the dataset and a part of the pre-stored data or the pre-stored data. The program code for resizing the window based on the data to merge the part of the pre-stored data or the pre-stored data with the dataset, thereby generating a resized window. It may be understood that, the window may be resized when the query is the registered query. The program code for selecting a maximum size window having a maximum size amongst the plurality of windows. The maximum size window may be selected based on the query. It may be understood that, the maximum size window may be selected when the query is the ad-hoc query. The program code for providing the data in one of the resized window and the maximum size window in order to resolve the query.

**EP 3 061 009 B1**

BRIEF DESCRIPTION OF THE DRAWINGS

The foregoing detailed description of embodiments is better understood when read in conjunction with the appended drawings. For the purpose of illustrating the disclosure, there is shown in the present document example constructions of the disclosure; however, the disclosure is not limited to the specific methods and apparatus disclosed in the document and the drawings.

The detailed description is described with reference to the accompanying figures. In the figures, the left-most digit(s) of a reference number identifies the figure in which the reference number first appears. The same numbers are used throughout the drawings to refer like features and components.

Figure 1 illustrates a network implementation of a system for providing data required for resolving a query is shown, in accordance with an embodiment of the present disclosure.

Figure 2 illustrates the system, in accordance with an embodiment of the present disclosure.

Figure 3 illustrates working of various modules of the system, in accordance with an embodiment of the present disclosure.

Figure 3(a) illustrates an example, in accordance with an embodiment of the present disclosure.

Figure 4 illustrates a method for providing the data required for resolving the query, in accordance with an embodiment of the present disclosure.

DETAILED DESCRIPTION

The object of the invention is solved by the features of the independent claims. Further embodiments are the subject-matter of the dependent claims.

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that the singular forms "a," "an," and "the" include plural references unless the context clearly dictates otherwise. Although any systems and methods similar or equivalent to those described herein can be used in the practice or testing of embodiments of the present disclosure, the exemplary, systems and methods are now described. The disclosed embodiments are merely exemplary of the disclosure, which may be embodied in various forms.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated, but is to be accorded the widest scope consistent with the principles and features described herein.

System and method for providing data required for resolving a query is described. In real world, a plurality of sensors may be deployed to capture the data for deriving stream processing and stream reasoning. Examples of the plurality of sensors may include, but not limited to, a soft sensor (such as RSS feed, twitter feeds, and web updates) and a hard sensor (such as a temperature sensor, a humidity sensor, an accelerometer sensor, a global positioning (GPS) sensor and a combination thereof). It may be understood that, the plurality of sensors may be capable of generating an unbounded stream of the data. In order to derive the stream processing and the stream reasoning, the system and the method are adapted to receive a snapshot of the unbounded stream of the data hereinafter referred to as a 'dataset' from the plurality of sensors.

In one embodiment, the system and the method are further adapted to receive metadata associated to the dataset from an external repository. In one example, the metadata may include, but not limited to, background information (including user profiles), geo-spatial information, and context-specific information. It may be understood that, the dataset and the metadata may be unified in a unified format by using a data unification algorithm. Examples of the unification algorithm may include, but not limited to, an information extraction technique, a machine learning technique, a natural language processing technique and a combination thereof. After receiving the dataset, a space for storing the dataset in a window of a plurality of windows may be created by removing pre-stored data from the window. The pre-stored data may be removed on arrival of the dataset. In one aspect, the pre-stored data may be stored in a repository post removal from the window. The pre-stored data may be stored in the repository based on priority associated to the pre-stored data. The association of the priority may be based upon plurality of priority parameters that includes data source of the pre-stored data, data pattern of the pre-stored data, logic of the query, and volume of the of the pre-stored data.

Subsequent to the creation of the space, the query may be received from a user. In one aspect, the query may be one of a registered query and an ad-hoc query. It may be understood that, the registered query is the query that is registered in the system and executed on data upon expiration of each pre-defined time interval. The ad-hoc query, on the other hand, may be received from the user in real-time via a user interface. After receiving the query, the data may be determined based on the query. In one aspect, the data may comprise the dataset and a part of the pre-stored data or the pre-stored data.

In one embodiment, when the query is the registered query, the window may be resized in order to merge the part of the pre-stored data or the pre-stored data with the dataset, thereby generating a resized window. It may be understood that, the window may be resized when the dataset stored in the window is not able to sufficiently provide the data for resolving the query. In such a scenario, the pre-stored data may be extracted from the repository in accordance with the query and then merged with the dataset for resolving the query. In another embodiment, when the query is the ad-hoc query, a maximum size window having a maximum size amongst the plurality of windows may be selected based on the query. It may be understood that, the maximum size window may be selected in order to sufficiently provide the data for resolving one or more ad-hoc queries received from the user. In one aspect, the maximum size window may be selected by using a context aware windowing technique facilitates to learn the maximum size window based on context of the dataset for resolving the query.

Thus, based on the query, the data may be provided in one of the resized window and the maximum size window in order to resolve the query. The resolution of the query may further facilitate the user to derive statistical inferences.

While aspects of described system and method for providing data required for resolving a query may be implemented in any number of different computing systems, environments, and/or configurations, the embodiments are described in the context of the following exemplary system.

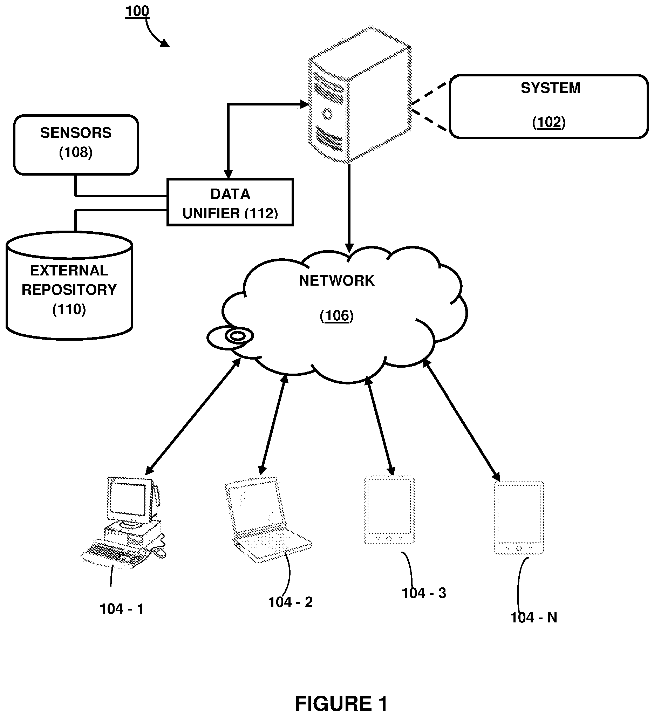

Referring now to Figure 1, a network implementation 100 of a system 102 for providing data required for resolving a query is illustrated, in accordance with an embodiment of the present disclosure. In one embodiment, the system 102 may receive a dataset captured by a plurality of sensors 108. After receiving the dataset, the system 102 may create a space for storing the dataset in a window of a plurality of windows. Subsequent to the creation of the space, the system 102 may receive the query from a user. The query is one of a registered query and an ad-hoc query. After receiving the query, the system 102 may determine the data based upon the query. The data may comprise the dataset and a part of the pre-stored data or the pre-stored data. In one embodiment, when the query is the registered query, the system 102 may resize the window to merge the part of the pre-stored data or the pre-stored data with the dataset, thereby generating a resized window. In another embodiment, when the query is the ad-hoc query, the system 102 may select a maximum size window having a maximum size amongst the plurality of windows based on the query. Based on the query, the system 102 may provide the data in one of the resized window and the maximum size window in order to resolve the query.

Although the present subject matter is explained considering that the system 102 is implemented on a server, it may be understood that the system 102 may also be implemented in a variety of computing systems, such as a laptop computer, a desktop computer, a notebook, a workstation, a mainframe computer, a server, a network server, a cloud-based computing environment and the like. In one implementation, the system 102 may comprise the cloud-based computing environment in which the user may operate individual computing systems configured to execute remotely located applications. It will be understood that the system 102 may be accessed by multiple users through one or more user devices 104-1, 104-2... 104-N, collectively referred to as user 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

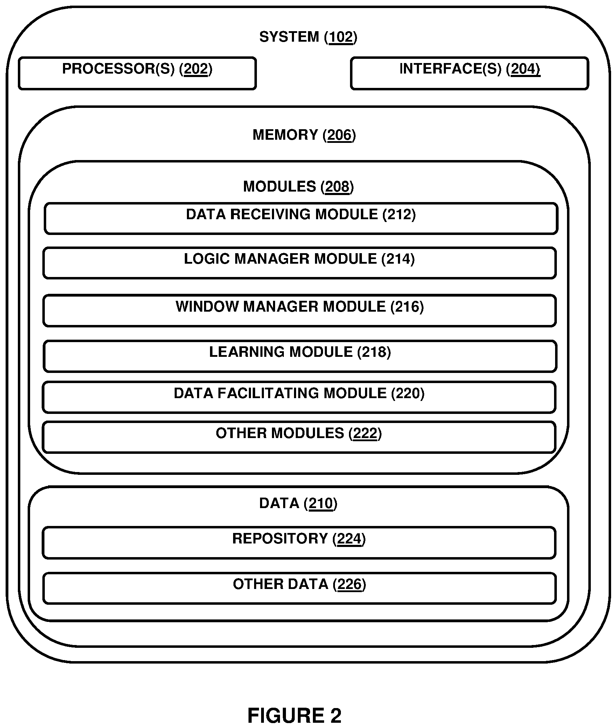

Referring now to Figure 2, the system 102 is illustrated in accordance with an embodiment of the present disclosure. In one embodiment, the system 102 may include a processor 202, an input/output (I/O) interface 204, and a memory 206. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in the memory 206.

The I/O interface 204 may include a variety of software and hardware interfaces, for example, a web interface, a graphical user interface, and the like. The I/O interface 204 may allow the system 102 to interact with the user directly or through the user devices also referred to as client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium and computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, and magnetic tapes. The memory 206 may include modules 208 and data 210.

The modules 208 include routines, programs, objects, components, data structures, etc., which perform particular tasks or implement particular abstract data types. In one implementation, the modules 208 may include a data receiving module 212, a logic manager module 214, a window manager module 216, a learning module 218, a data facilitating module 220 and other modules 222. The other modules 222 may include programs or coded instructions that supplement applications and functions of the system 102. The modules 208 described herein may be implemented as software modules that may be executed in the cloud-based computing environment of the system 102.

The data 210, amongst other things, serves as a repository for storing data processed, received, and generated by one or more of the modules 208. The data 210 may also include a repository 224, and other data 226. The other data 226 may include data generated as a result of the execution of one or more modules in the other modules 222.

In one implementation, at first, a user may use the client devices 104 to access the system 102 via the I/O interface 204. The user may register themselves using the I/O interface 204 in order to use the system 102. In one aspect, the user may accesses the I/O interface 204 of the system 102 for providing data required for resolving a query. In order to provide the data, the system 102 may employ the plurality of modules i.e. the data receiving module 212, the logic manager module 214, the window manager module 216, the learning module 218, and the data facilitating module 220. The detailed working of the plurality of modules is described below.

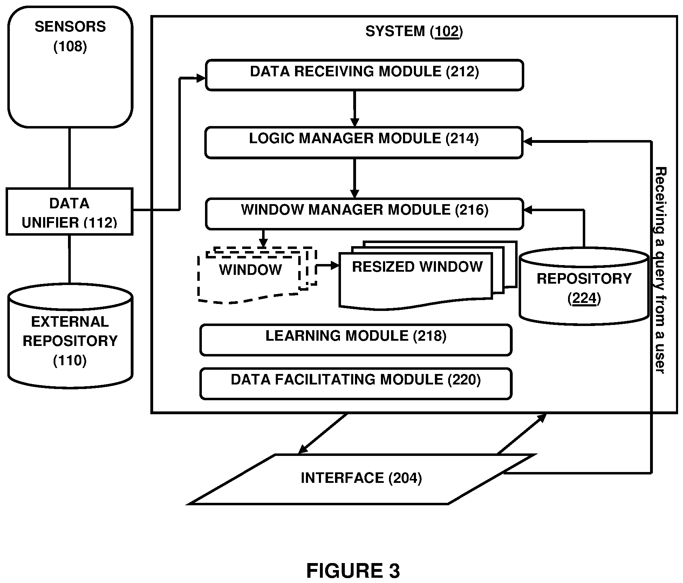

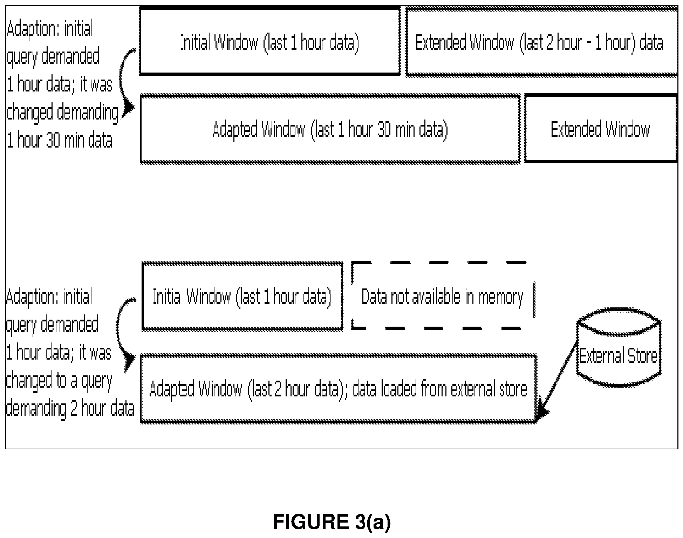

Referring to Figure 3, in order to provide the data for resolving the query, initially, the data receiving module 212 may receive a dataset captured by a plurality of sensors 108. It may be understood that, the plurality of sensors 108 is capable of generating an unbounded stream of data. Example of the plurality of sensors 108 may include a soft sensor and a hard sensor. The soft sensor may include, but not limited to, RSS feed, twitter feeds, web updates. The hard sensor may include, but not limited to, a temperature sensor, a humidity sensor, an accelerometer sensor, a global positioning (GPS) sensor and a combination thereof. Since the plurality of sensors 108 is deployed around a geographical location to capture various events and information, therefore the plurality of sensors 108 is capable of generating the unbounded stream of data. In one aspect, the data receiving module 212 may receive the dataset of the unbounded stream of data based on a pre-defined set of rules. It may be understood that, the dataset is a subset of the unbounded stream of data.

It may be understood that, in certain scenarios the dataset, received from the soft sensor, may not be in a format similar to the dataset received from the hard sensor. For example, the dataset, received from the soft sensor, may comprise "Shooting going on at street X", (RSS feeds of crime alerts), "fire at 4th block of building A" (fire alerts) and "Heavy congestion at street Y" (traffic congestion alerts). Examples of the dataset, received from the hard sensor, may comprise 40% humidity (captured by the humidity sensor), 35° (captured by the temperature sensor). As it may be understood that, the dataset, received from the soft sensor are in an unstructured format, the data receiving module 212 may further convert the dataset, received from the soft sensor, into the structured format.

In one embodiment, the data receiving module 212 may convert the dataset from the unstructured format into the structured format by extracting a metadata, associated to the dataset, from an external repository 110. Examples of the metadata may include, but not limited to, geo-spatial data, profile data of a person. After extracting the metadata, the data receiving module 212 may unify the dataset and the metadata in a unified format by means of a data unifier 112 that utilizes a data unification algorithm. Examples of the data unification algorithm may include, but not limited to, information extraction technique, a machine learning technique, a natural language processing (NLP) technique and a combination thereof.

After unifying the dataset in the unified format, the logic manager module 214 may create a space for storing the dataset in a window of a plurality of windows. The space may be created by removing pre-stored data from the window. It may be understood that, the window is capable of storing the pre-stored data in a temporary storage which is stored in a main memory of the system 102. Example of the main memory may include a Random Access Memory of the system 102. In one aspect, the dataset pre-stored in the window becomes the pre-stored data upon arrival of the dataset from a sensor of the plurality of sensors 108. Thus, in this manner, the pre-stored data is removed from the window and stored in a repository 224 in order to store the dataset in the window received from the sensor. In one embodiment, the repository 224 may be stored in the main memory of the system 102. It may be understood that, if the main memory does not have enough space, then the repository 224 may be stored in a low latency physical disk (such as a hard disk) of the system 102. In another embodiment, if the low latency physical disk does not have enough space to store the repository 224, then the repository 224 may be stored in a physical disk of an another system connected with the system 102 through a network 106.

After storing the dataset in the window and the pre-stored data in the repository 224, the logic manager module 214 may receive the query from a user via an I/O interface 204. It may be understood that, the query may be one of a registered query and an ad-hoc query. The registered query is registered in the system 102 and executed on the dataset upon expiration of each pre-defined time interval. The ad-hoc query, on the other hand, may be received from the user in real-time via the I/O interface 204. After receiving the query, the window manager module 216 may determine the data based upon the query. The data may comprise the dataset and a part of the pre-stored data or the pre-stored data. In order to further understand working of the logic manager module 214, consider an example where the query received from the user is:

select ?person ?crime from "crimeStream" range 60 min from "personGPS" range 4 min where {?person <affectedBy> ?crime} Rule: (?crime <happeningAt> ?loc) . (?loc <isNear> ?loc2) . (?person <isSituatedAt> ?loc2) -> (?person <affectedBy> ?crime)……(1)

It may be understood that, the query (1) may require the data of last '60 minutes' for determining any criminal activity happening at location 'X'. In order to resolve the query (1), the logic manager module 214 may create a space for storing the dataset of last '60 minutes'. As the window is storing the dataset of last'60 minutes', thus the dataset may be provided to the query (1) in order to resolve the query for deriving statistical inferences. However, it may be understood that, sometimes the user may dynamically change the requirement, resulting into the change in the query (1). The change in query (for determining any criminal activity happening at the location 'X' from the last '60' minutes to last '120' minutes. In such a scenario, the query (1) may be modified to:

select ?person ?crime from "crimeStream" range 120 min from "personGPS" range 4 min where {?person <affectedBy> ?crime} Rule: (?crime <happeningAt> ?loc) . (?loc <isNear> ?loc2) . (?person <isSituatedAt> ?loc2) -> (?person <affectedBy> ?crime) ……(2)

Since, the window is storing the dataset of last '60' minutes, therefore upon execution of the query (2) on the window will certainly provide erroneous results as the window may not be able to resolve the query (2) that requires the dataset pertaining to the last '120' minutes. In such a scenario, for resolving the query (2), the window manager module 216 may resize the window to merge the part of the pre-stored data or the pre-stored data with the dataset, thereby generating a resized window. In one aspect, the window may be resized when the query is the registered query. In order to explain the working of the window manager module 216 for resolving the registered query, consider an example as mentioned below:

Referring to figure 3(a), a query may be registered in the system by a user to determine number of accidents occurred in 'New York' city in every '1 hour'. In order to resolve the query, the data receiving module 212 may receive the dataset (pertaining to '1 hour' activities in the 'New York' city) generated by the plurality of sensors 108 deployed around the 'New York' city for monitoring the accidents. Upon arrival of the dataset, the logic manager module 214 may remove a pre-stored data in a window hereinafter referred to as an 'initial window' in this example. In one aspect, the pre-stored data pertains to '1 hour' activities in the 'New York' city. The pre-stored data is then removed from the initial window and stored in an 'extended window', hereinafter also referred as a repository 224, for future reference. After removing the pre-stored data from the initial window, the logic manager module 214 may create a space in the initial window for storing the dataset received from a sensor of the plurality sensors 108 deployed around the 'New York' city. Subsequent to the storage of the dataset in the initial window, the query may be executed on the dataset for determining the number of accidents occurred in the 'New York' city in every '1 hour'. Upon executing the query, a report may be generated in order to depict the number of accidents occurred in the 'New York' city in every '1 hour'.

However, in certain scenarios, the user might change the query to determine the number of accidents occurred in 'New York' city in every '1.5 hours'. Since the initial window is storing the dataset pertaining to '1 hour' activities in the 'New York' city, therefore, the window manager module 216 may have to re-determine data required for resolving the query changed/modified. Therefore, in such scenario, it is observed that an additional data of '0.5 hour' is required in the initial window in order to resolve the query. Therefore, the window manager module 216 may resize the initial window and thereby generate the resized window, hereinafter referred to as an 'adapted window' (in this example) in order to occupy the additional data. In one aspect, the window manager module 216 may merge the part of the pre-stored data or the pre-stored data with the dataset as illustrated in figure 3(a). The window may be resized in order to resolve the query for determining the number of accidents occurred in 'New York' city in every '1.5 hours'. In order to provide the additional data, the part of the pre-stored data pertaining to '0.5 hour' is retrieved from the extended window or the repository 224 and then merged with the dataset in order to resolve the query thereby determining the number of accidents occurred in 'New York' city in every '1.5 hours'.

In one embodiment, the pre-stored data may be stored in the repository 224 based on priority associated to the pre-stored data. In one aspect, if the capacity of the repository 224 becomes high and extension is not possible, then the window manager module 216 may further be adapted to associate priority to each instance of the pre-stored data that may assist in defining optimal policies to delete least required data instance of the pre-stored data. The priority may be associated to the data instance using a plurality of priority parameters. Examples of the plurality of priority parameters may include, but not limited to, data source, data pattern, logic of the query, and volume of the data. The detailed explanation of the plurality of priority parameters is described below:

Data source: In one aspect, a subset of the pre-stored data, received from a sensor of the plurality of sensors 108, stored in the repository 224 is more critical as compared to other subset of the pre-stored data received from other sensor of the plurality of sensors 108. For example, the subset received from a fire sensor capable of detecting whether a "fire" is triggered in a building is deemed to be more critical than the other subset received from a weather sensor capable of detecting humidity is "high" or "low". Due to the fact that ignorance of the subset received from the fire sensor may lead to serious consequences; therefore the subset received from the fire sensor may be assigned with a 'higher' priority as compared to the other subset received from the weather sensor. In one aspect, the 'higher' priority may be assigned based on the metadata corresponding to each sensor stored in the external repository 110. In an example, a sensor 1 is a 'Fire sensor' that detects a level of fire in building 'A' i.e. '70%' and sensor 2 is a 'Humidity sensor' that detects a level of humidity in a city i.e. '80%'. Thus, based on the metadata, the subset received from the Sensor 1 (i.e. Fire sensor) may be assigned with the 'higher' priority than the other subset received from the Sensor 2 (i.e. Humidity sensor).

Data Pattern: In one aspect, when a plurality of queries are registered in the system 102, a subset of the pre-stored data that is needed by maximum number of queries, of the plurality of queries, is computed, and accordingly priority may be assigned to the subset. For example, considering the following queries:

Query 1: (returning list of persons affected by an event)
select ?person ?event where {?person <atLocation> ?loc. ?event <atLocation> ?loc}
Query 2: (returning list of events and the city in which each is occurring)
select ?event ?city where {?event <atLocation> ?loc. ?loc <withinCity> ?city}
Query 3: (returning list of places located near a event}
select ?event ?loc2 where {?event <atLocation> ?loc. ?loc <isNear> ?loc2 }

Based on the plurality of queries as aforementioned, it may be observed that the subset of the pre-stored data comprising "?event <atLocation> ?loc" is occurring in each of the three queries, therefore the window manager module 216 may assign priority to the subset (i.e. "?event <atLocation> ?loc") in order to facilitate the subset for resolving each query of the plurality of queries.

Logic of the query: In one aspect, the priority may be assigned to a subset of the pre-stored data based on the logic of the query. It may be understood that, few of the plurality of sensors 108 that disseminated a subset may not be associated with critical event pattern, but combining the subset based on the logic of the query may be useful in detecting critical event pattern. In such a scenario, the metadata associated to the sensor corresponding to the subset that may be provided to resolve the query (like proximity crime alerts) is assigned with a 'higher' priority than other subset of the pre-stored data for resolving the non-critical query (like nearby restaurant offer alerts). For example, consider the following two queries:

Query 1: Proximity Crime Alert Query
select ?person ?crime ?loc where {?crime <happenningAt> ?loc.
?loc <isNear> ?loc2. ?person <isSituatedAt> ?loc2}
Query 2: Nearby Restaurant Alert Query
select ?person ?loc2 ?restaurant where {?restaurant <locatedAt> ?loc. ?restaurant <isOpen> 'true'.
?loc <isNear> ?loc2. ?person <isSituatedAt> ?loc2}

Thus, based on the metadata associated to the sensor corresponding to 'Crime Alert' and the sensor corresponding to 'Nearby Restaurant', the subset corresponding to 'Crime Alert' of the query 1 is assigned with the 'higher' priority than the other subset corresponding to 'Nearby Restaurant' of the query 2.

Volume of the data: It may be understood that, volume of subset of the pre-stored data provided to a plurality of queries may vary. For example, a query may be provided with less volume of subset than compared to another query provided with high volume of other subset of the pre-stored data. In such a scenario, the subset that may be provided in less volume may be assigned with a higher priority as compared to the other subset provided in the high volume. For example consider two queries having the same priority:-

Query 1: Gas station Alert Query
select ?person ?gasStation ?loc where
{?gasStation < locatedAt> ?loc. ?gasStation <hasGas> 'true'.
?loc <isNear> ?loc2. ?person <isSituatedAt> ?loc2}

Query 2: Nearby Restaurant Alert Query
select ?person ?loc2 ?restaurant where {?restaurant <locatedAt> ?loc.
?loc <isNear> ?loc2. ?person <isSituatedAt> ?loc2}

It is to be understood that, in a city, the number of gas stations is much less compared to the number of restaurants, so in such a case, the subset corresponding to "?gasStation <hasGas> 'true'" may be assigned with a 'higher' priority than the other subset corresponding to "?restaurant <isOpen> 'true'". It is to be understood that, even after deleting the a part of the other subset corresponding to "?restaurant <isOpen> 'true' (restaurant data), there will be other part of the other subset corresponding to "?restaurant <isOpen> 'true' is stored in the repository 224 that may be provided for resolving the query.

Thus, based on the plurality of priority parameters, as aforementioned, a final priority may be assigned to the subset or the other subset of the pre-stored data corresponding to each sensor in order to determine the optimal policies to delete the least required data instance of the pre-stored data from the repository 224. In one aspect, the final priority may be assigned by assigning a weight to each use case. As illustrated in a table below, the final priority may be assigned within a range of '0-4', where '0' indicates a lowest priority and '4' indicates highest priority and each strategy given equal weight. In one embodiment, when the subset and the other subset of the pre-stored data is assigned with same priority, then either the subset or the other subset may be deleted based on timestamp associated to the subset or the other subset.

| 16 Cases<br>4 Strategies | A | B | C | D | E | F | G | H | I | J | K | L | M | N | O | P |
|---|---|---|---|---|---|---|---|---|---|---|---|---|---|---|---|---|
| Data Source | 0 | 1 | 0 | 1 | 0 | 1 | 0 | 1 | 0 | 1 | 0 | 1 | 0 | 1 | 0 | 1 |
| Data Pattern | 0 | 0 | 1 | 1 | 0 | 0 | 1 | 1 | 0 | 0 | 1 | 1 | 0 | 0 | 1 | 1 |
| Logic of the query | 0 | 0 | 0 | 0 | 1 | 1 | 1 | 1 | 0 | 0 | 0 | 0 | 1 | 1 | 1 | 1 |
| Volume of the data | 0 | 0 | 0 | 0 | 0 | 0 | 0 | 0 | 1 | 1 | 1 | 1 | 1 | 1 | 1 | 1 |
| Final Priority | 0 | 1 | 1 | 2 | 1 | 2 | 2 | 3 | 1 | 2 | 2 | 3 | 2 | 3 | 3 | 4 |

Therefore, based on the weight assigned to each case, the final priority of the dataset may be determined that may further facilitate in determining the data instance of the pre-stored data to be deleted from one of the repository 224 or the extended window. In this manner, the window manager module 216 may resize the window when the query is the registered query and further manages the pre-stored data stored in the repository 224 based on the plurality of priority parameters.

In one aspect, the learning module 218 may select a maximum size window having a maximum size amongst the plurality of windows. It may be understood that, a window of the plurality of windows may be adapted to store the dataset received from the sensor. In one aspect, the maximum size window may be selected when the query is the ad-hoc query. In other words, the maximum size window may facilitate to ensure that the dataset is loaded in the window in order to resolve the query. In order to understand the working of the learning module 218, consider an example where three ad-hoc queries are received from the user. Consider, out of the three ad-hoc queries , Query 1 is for determining traffic congestion, Query 2 is for finding nearby restaurants and, Query 3 for determining crime alert based on person's GPS location, which are described as below:

Query 1: (Finding traffic congestion) select ?person ?trafficCongestion from "cityTrafficStream" range 15min from "personGPS" range 6 min where { ?person < isSituatedAt> ?loc . ?trafficCongestion <atLocation> ?loc }

Query 2: (Finding nearby restaurants) select ?person ?loc2 ?restaurant from "restaurantStream" range 30 minutes from "personGPS" range 5 minutes where {?restaurant <locatedAt> ?loc. ?restaurant <isOpen> "true. ?loc <isNear> ?loc2. ?person <isSituatedAt> ?loc2}

Query 3: (Proximity Crime Alert Query) select ?person ?crime ?loc from "crimeStream" range 60 min from "person-GPS" range 4 min where {?crime <happenningAt> ?loc. ?loc <isNear> ?loc2. ?person <isSituatedAt> ?loc2}

It may be understood from the aforementioned three queries that, a size of a window 1, a window 2, and a window 3 pertaining to "personGPS" are 6 minutes, 5 minutes and 4 minutes respectively for the query 1, the query 2, and the query 3. Thus, in case of ad-hoc query, the logic manager module 214 may select the maximum size window amongst the three windows (i.e. the window 1 of '6 minutes') in order to resolve all the three queries.

In one embodiment, the learning module 218 may determine the size of the window by calculating average size of the plurality of windows. In one example if the size of a window 1, a window 2, a window 3, a window 4, and a window 5 are 20, 25, 30, 100, and 120 respectively, then the size of the window may be determined by calculating the average size of all the five windows (i.e. the window 1, the window 2, and the window 3, the window 4, and the window 5). The average size of five windows may be 59 (20 +25 +30 + 100 + 120 / 5 = 59). Thus, based on the determination of the average size of the five windows, the learning module 218 may determine the size of the window as the average size of all the windows, which is '59' in this case.

In one embodiment, the learning module 218 may further select the maximum size window using a context aware windowing technique. The context aware windowing technique may facilitate to learn the maximum size window based on context of the dataset under which the ad-hoc query may be executed and accordingly the dataset may be stored in the window for resolving the ad-hoc query. For example, during daytime (a context) an ad-hoc query related to "traffic" may be received that may require the dataset pertaining to 'usual start of office hour's period'. Thus based on the query, the learning module 218 may store the dataset in the window in order to resolve the ad-hoc query. Similarly for night (a context) another ad-hoc query related to "dinner offers at restaurants" may be received that may require the dataset pertaining to "seat and menu availability post evening till midnight'. In such scenarios, the size of the window pertaining to "personGPS" may be represented as: Context: Morning | Size of the window: '5 minutes' and Context: Night | Size of the window: '30 minutes'.

Based on the determination of the query (i.e. the registered query or the ad-hoc query), the data facilitating module 220 may provide the data comprising the dataset and a part of the pre-stored dataset or the pre-stored dataset in one of the resized window and the maximum size window in order to resolve the query. In this manner, the system 102 may dynamically adapt the size of the window based on the data to be provided to the query in order to resolve the query. Thus, the resolution of the query may facilitate the user to derive statistical inferences and thereby taking necessary measures.

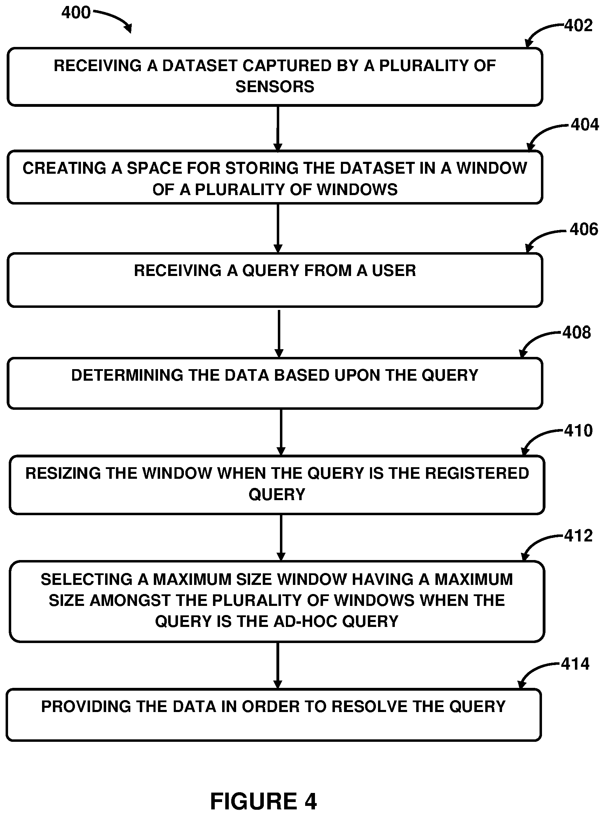

Referring now to Figure 4, a method 400 for providing data required for resolving a query is shown, in accordance with an embodiment of the present disclosure. The method 400 may be described in the general context of computer executable instructions. Generally, computer executable instructions can include routines, programs, objects, components, data structures, procedures, modules, functions, etc., that perform particular functions or implement particular abstract data types. The method 400 may be practiced in a distributed computing environment where functions are performed by remote processing devices that are linked through a communications network. In a distributed computing environment, computer executable instructions may be located in both local and remote computer storage media, including memory storage devices.

The order in which the method 400 is described is not intended to be construed as a limitation, and any number of the described method blocks can be combined in any order to implement the method 400 or alternate methods. Additionally, individual blocks may be deleted from the method 400 without departing from the scope of the disclosure described herein. Furthermore, the method can be implemented in any suitable hardware, software, firmware, or combination thereof. However, for ease of explanation, in the embodiments described below, the method 400 may be considered to be implemented in the above described in the system 102.

At block 402, a dataset captured by a plurality of sensors may be received. In one implementation, the dataset may be received by the data receiving module 212.

At block 404, a space for storing the dataset in a window of a plurality of windows may be created. In one aspect, the space may be created by removing pre-stored data from the window. In one aspect, the pre-stored data may be removed on arrival of the dataset and further stored in a repository post removal from the window. In one implementation, the space may be created by the logic manager module 214.

At block 406, a query may be received from a user. In one aspect, the query is one of a registered query and an ad-hoc query. In one implementation, the query may be received by the logic manager module 214.

At block 408, the data may be determined based upon the query. In one aspect, the data may comprise the dataset and a part of the pre-stored data or the pre-stored data. In one implementation, the data may be determined by the window manager module 216.

At block 410, the window may be resized to merge the part of the pre-stored data or the pre-stored data with the dataset, thereby generating a resized window. In one aspect, the window may be resized when the query is the registered query. In one implementation, the window may be resized by the window manager module 216.

At block 412, a maximum size window having a maximum size amongst the plurality of windows may be selected when the query is the ad-hoc query. In one aspect, the maximum size window may be selected based on the query. In one implementation, the maximum size window may be selected by the learning module 218.

At block 414, the data may be provided in one of the resized window and the maximum size window in order to resolve the query. In one implementation, the data may be provided by the data facilitating module 220.

Although implementations for methods and systems for providing data required for resolving a query have been described in language specific to structural features and/or methods, it is to be understood that the implementations and/or embodiments are not necessarily limited to the specific features or methods described. Rather, the specific features and methods are disclosed as examples of implementations for providing the data required for resolving the query.

Exemplary embodiments discussed above may provide certain advantages. Though not required to practice aspects of the disclosure, these advantages may include those provided by the following features.

Some embodiments enable a system and a method to merge additional data stored in a repository with dataset stored in a static window in order to sufficiently provide the data for resolving a query.

Some embodiments enable a system and a method to facilitate resizing of the window in accordance with logic of one of a registered query and an ad-hoc query.

Some embodiments enable a system and a method to prioritize the data acquired from different sensors based on requirements associated with the logic and context, query.

Some embodiments enable a system and a method to manage the additional data stored in the repository based on priority and criticality of the data.

Some embodiments enable a system and a method to process the data fast as, the data has to reside in main memory instead of physical storage, and further limiting the amount of the data that can be stored in the physical storage.

**Claims**

1. A method for providing data required for resolving a query, the method comprising:

   receiving a dataset captured by a plurality of sensors, wherein the dataset is received based on a pre-defined set of rules;
   creating a space for storing the dataset in a window (404), of a plurality of windows, of the database by removing pre-stored data from the window, wherein the pre-stored data is removed on arrival of the dataset, and wherein the pre-stored data is stored in a repository post removal from the window;
   receiving the query from a user (406), wherein the query is one of a registered query and an ad-hoc query, wherein the ad hoc query is received in real time from the user;
   determining the data based upon the query (408), wherein the data comprises the dataset and a part of the pre-stored dataset or the pre-stored dataset, wherein size of the window is dynamically adapted based on the data to be provided to the query;
   resizing the window (410) to merge the part of the pre-stored dataset or the pre-stored dataset with the dataset, thereby generating a resized window, wherein the window is resized when the query is the registered query;
   selecting a maximum size window (412) having a maximum size amongst the plurality of windows, wherein the maximum size window is selected when the query is the ad-hoc query;
   generating an unbounded stream of data by the plurality of sensors (108); wherein the plurality of sensors is deployed around a geographical location to capture information and events;
   receiving a snapshot of the unbounded stream of the data, wherein the snapshot is associated with the dataset captured by the plurality of sensors.

2. The method of claim 1, wherein the receiving the dataset further comprises:

   extracting a metadata from an external repository, wherein the metadata is associated to the dataset, and unifying the dataset and the metadata in a unified format by using a data unification algorithm.

3. The method of claim2, wherein the metadata comprises geo-spatial data and profile data of a person.

4. The method of claim 2, wherein the dataset and the metadata is unified by using at least one of an information extraction technique, a machine learning technique, and a natural language processing technique.

5. The method of claim 1, wherein the pre-stored data is stored in a repository based on priority associated with the pre-stored data, wherein the priority is associated using a plurality of priority parameters, and wherein the plurality of priority parameters comprises data source, data pattern, logic of the query, and volume of the data.

6. A system for providing data required for resolving a query (102), the system comprising:

   a processor (202); and
   a memory (206) coupled to the processor, wherein the processor is capable of executing a plurality of modules stored in the memory, and wherein the plurality of module comprising: a data receiving module (212) configured to receive a dataset captured by a plurality of sensors, wherein the dataset is received based on a pre-defined set of rules; a logic manager module (214) configured to create a space for storing the dataset in a window, of a plurality of windows, of the database by removing pre-stored data from the window, wherein the pre-stored data is removed on arrival of the dataset, and wherein the pre-stored data is stored in a repository post removal from the window;
   receive the query from a user (406), wherein the query is one of a registered query and an ad-hoc query, wherein the ad hoc query is received in real time from the user; a window manager module (216) configured to determine the data based upon the query, wherein the data comprises the dataset and a part of the pre-stored dataset or the pre-stored dataset, wherein the size of the window is dynamically adapted based on the data to be provided to the query ;
   resize the window to merge the part of the pre-stored dataset or the pre-stored dataset with the dataset, thereby generating a resized window, wherein the window is resized when the query is the registered query;
   a learning module (218) configured to select a maximum size window having a maximum size amongst the plurality of windows, wherein the maximum size window is selected when the query is the ad-hoc query;
   a data facilitating module (220) configured to provide the data in one of the resized window and the maximum size window in order to resolve the query;
   the processor configured to generate an unbounded stream of data by the plurality of sensors, wherein the plurality of sensors (108) is deployed around a geographical location to capture information and events;
   the processor configured to receive a snapshot of the unbounded stream of the data, wherein the snapshot is associated with the dataset captured by the plurality of sensors.

7. A non-transitory computer readable medium embodying a program executable in a computing device for providing data required for resolving a query, the program comprising: a program code for receiving a dataset captured by a plurality of sensors (402), wherein the dataset is received based on a pre-defined set of rules; a program code for creating a space for storing the dataset in a window (404) of a plurality of windows, of the database by removing pre-stored data from the window, wherein the pre-stored data is removed on arrival of the dataset, and wherein the pre-stored data is stored in a repository post removal from the window;
   a program code for receiving the query from a user (406), wherein the query is one of a registered query and an ad-hoc query, wherein the ad-hoc query is received in real time from the user; a program code for determining the data based upon the query (408), wherein the data comprises the dataset and a part of the pre-stored dataset or the pre-stored dataset, wherein the size of the window is dynamically adapted based on the data to be provided to the query;
   a program code for resizing the window (410) to merge the part of the pre-stored dataset or the pre-stored dataset with the dataset, thereby generating a resized window, wherein the window is resized when the query is the registered query;
   a program code for selecting a maximum size window (412) having a maximum size amongst the plurality of windows, wherein the maximum size window is selected when the query is the ad-hoc query;
   a program code for providing the data (414) in one of the resized window and the maximum size window in order to resolve the query;

a program code for generating an unbounded stream of data by the plurality of sensors, wherein the plurality of sensors is deployed around a geographical location to capture information and events;

a program code for receiving a snapshot of the unbounded stream of the data, wherein the snapshot is associated with the dataset captured by the plurality of sensors.

**Patentansprüche**

1. Verfahren zum Bereitstellen von Daten, die zur Auflösung einer Anfrage erforderlich sind, wobei das Verfahren Folgendes umfasst:

   Empfangen eines durch mehrere Sensoren erfassten Datensatzes, wobei der Datensatz basierend auf einem vordefinierten Satz von Regeln empfangen wird;

   Schaffen eines Platzes zum Speichern des Datensatzes in einem Fenster (404), von mehreren Fenstern, der Datenbank durch Entfernen zuvor gespeicherter Daten aus dem Fenster, wobei die zuvor gespeicherten Daten bei Ankunft des Datensatzes entfernt werden und wobei die zuvor gespeicherten Daten nach der Entfernung aus dem Fenster in einem Repositorium gespeichert werden;

   Empfangen der Anfrage von einem Benutzer (406), wobei die Anfrage eine registrierte Anfrage oder eine Ad-hoc-Anfrage ist, wobei die Ad-hoc-Anfrage in Echtzeit von dem Benutzer empfangen wird;

   Bestimmen der Daten basierend auf der Anfrage (408), wobei die Daten den Datensatz und einen Teil des zuvor gespeicherten Datensatzes oder den zuvor gespeicherten Datensatz umfassen, wobei die Größe des Fensters basierend auf den der Anfrage bereitzustellenden Daten dynamisch angepasst wird;

   Verändern der Größe des Fensters (410), um den Teil des zuvor gespeicherten Datensatzes oder den zuvor gespeicherten Datensatz mit dem Datensatz zusammenzuführen, wodurch ein größenverändertes Fenster erzeugt wird, wobei die Größe des Fensters verändert wird, wenn die Anfrage die registrierte Anfrage ist;

   Auswählen eines Fensters mit maximaler Größe (412), das eine maximale Größe unter den Fenstern aufweist, wobei das Fenster mit maximaler Größe ausgewählt wird, wenn die Anfrage die Ad-hoc-Anfrage ist;

   Erzeugen eines unbegrenzten Stroms von Daten durch die Sensoren (108); wobei die Sensoren um einen geografischen Ort herum eingesetzt sind, um Informationen und Ereignisse zu erfassen;

   Empfangen eines Schnappschusses des unbegrenzten Stroms der Daten, wobei der Schnappschuss dem durch die Sensoren erfassten Datensatz zugeordnet ist.

2. Verfahren nach Anspruch 1, wobei das Empfangen des Datensatzes ferner Folgendes umfasst:

   Extrahieren von Metadaten aus einem externen Repositorium, wobei die Metadaten mit dem Datensatz assoziiert sind, und

   Vereinheitlichen des Datensatzes und der Metadaten in einem vereinheitlichten Format durch Verwenden eines Datenvereinheitlichungsalgorithmus.

3. Verfahren nach Anspruch 2, wobei die Metadaten geografisch-räumliche Daten und Profildaten einer Person umfassen.

4. Verfahren nach Anspruch 2, wobei der Datensatz und die Metadaten durch Verwendung einer Informationsextraktionstechnik und/oder einer Technik des maschinellen Lernens und/oder einer Technik der Verarbeitung natürlicher Sprache vereinheitlicht werden.

5. Verfahren nach Anspruch 1, wobei die zuvor gespeicherten Daten basierend auf einer mit den zuvor gespeicherten Daten assoziierten Priorität in einem Repositorium gespeichert werden, wobei die Priorität unter Verwendung mehrerer Prioritätsparameter assoziiert wird und wobei die Prioritätsparameter eine Datenquelle, ein Datenmuster, eine Logik der Anfrage und ein Volumen der Daten umfassen.

6. System zum Bereitstellen von Daten, die zur Auflösung einer Anfrage (102) erforderlich sind, wobei das System Folgendes umfasst:

   einen Prozessor (202); und

   einen Speicher (206), der mit dem Prozessor gekoppelt ist, wobei der Prozessor in der Lage ist, mehrere in dem Speicher gespeicherte Module auszuführen, und wobei die Module Folgendes umfassen:

ein Datenempfangsmodul (212), ausgelegt zum Empfangen eines durch mehrere Sensoren erfassten Datensatzes, wobei der Datensatz basierend auf einem vordefinierten Satz von Regeln empfangen wird;
ein Logikverwaltungsmodul (214), ausgelegt zum Schaffen eines Platzes zum Speichern des Datensatzes in einem Fenster, von mehreren Fenstern, der Datenbank durch Entfernen zuvor gespeicherter Daten aus dem Fenster, wobei die zuvor gespeicherten Daten bei Ankunft des Datensatzes entfernt werden und wobei die zuvor gespeicherten Daten nach der Entfernung aus dem Fenster in einem Repositorium gespeichert werden;
Empfangen der Anfrage von einem Benutzer (406), wobei die Anfrage eine registrierte Anfrage oder eine Ad-hoc-Anfrage ist, wobei die Ad-hoc-Anfrage in Echtzeit von dem Benutzer empfangen wird;
ein Fensterverwaltungsmodul (216), ausgelegt zum Bestimmen der Daten basierend auf der Anfrage, wobei die Daten den Datensatz und einen Teil des zuvor gespeicherten Datensatzes oder den zuvor gespeicherten Datensatz umfassen, wobei die Größe des Fensters basierend auf den der Anfrage bereitzustellenden Daten dynamisch angepasst wird;
Verändern der Größe des Fensters, um den Teil des zuvor gespeicherten Datensatzes oder den zuvor gespeicherten Datensatz mit dem Datensatz zusammenzuführen, wodurch ein größenverändertes Fenster erzeugt wird, wobei die Größe des Fensters verändert wird, wenn die Anfrage die registrierte Anfrage ist;
ein Lernmodul (218), ausgelegt zum Auswählen eines Fensters mit maximaler Größe, das eine maximale Größe unter den Fenstern aufweist, wobei das Fenster mit maximaler Größe ausgewählt wird, wenn die Anfrage die Ad-hoc-Anfrage ist;
ein Datenunterstützungsmodul (220), ausgelegt zum Bereitstellen der Daten in dem größenveränderten Fenster oder dem Fenster mit maximaler Größe, um die Anfrage aufzulösen;
wobei der Prozessor ausgelegt ist zum Erzeugen eines unbegrenzten Stroms von Daten durch die Sensoren, wobei die Sensoren (108) um einen geografischen Ort herum eingesetzt sind, um Informationen und Ereignisse zu erfassen;
wobei der Prozessor ausgelegt ist zum Empfangen eines Schnappschusses des unbegrenzten Stroms der Daten, wobei der Schnappschuss dem durch die Sensoren erfassten Datensatz zugeordnet ist.

7. Nichtflüchtiges computerlesbares Medium, auf dem ein Programm verkörpert ist, das in einer Rechenvorrichtung zum Bereitstellen von Daten, die zur Auflösung einer Anfrage erforderlich sind, ausführbar ist, wobei das Programm Folgendes umfasst:

einen Programmcode zum Empfangen eines durch mehrere Sensoren erfassten Datensatzes (402), wobei der Datensatz basierend auf einem vordefinierten Satz von Regeln empfangen wird;
einen Programmcode zum Schaffen eines Platzes zum Speichern des Datensatzes in einem Fenster (404), von mehreren Fenstern, der Datenbank durch Entfernen zuvor gespeicherter Daten aus dem Fenster, wobei die zuvor gespeicherten Daten bei Ankunft des Datensatzes entfernt werden und wobei die zuvor gespeicherten Daten nach der Entfernung aus dem Fenster in einem Repositorium gespeichert werden;
einen Programmcode zum Empfangen der Anfrage von einem Benutzer (406), wobei die Anfrage eine registrierte Anfrage oder eine Ad-hoc-Anfrage ist, wobei die Ad-hoc-Anfrage in Echtzeit von dem Benutzer empfangen wird;
einen Programmcode zum Bestimmen der Daten basierend auf der Anfrage (408), wobei die Daten den Datensatz und einen Teil des zuvor gespeicherten Datensatzes oder den zuvor gespeicherten Datensatz umfassen, wobei die Größe des Fensters basierend auf den der Anfrage bereitzustellenden Daten dynamisch angepasst wird;
einen Programmcode zum Verändern der Größe des Fensters (410), um den Teil des zuvor gespeicherten Datensatzes oder den zuvor gespeicherten Datensatz mit dem Datensatz zusammenzuführen, wodurch ein größenverändertes Fenster erzeugt wird, wobei die Größe des Fensters verändert wird, wenn die Anfrage die registrierte Anfrage ist;
einen Programmcode zum Auswählen eines Fensters mit maximaler Größe (412), das eine maximale Größe unter den Fenstern aufweist, wobei das Fenster mit maximaler Größe ausgewählt wird, wenn die Anfrage die Ad-hoc-Anfrage ist;
einen Programmcode zum Bereitstellen der Daten (414) in dem größenveränderten Fenster oder dem Fenster mit maximaler Größe, um die Anfrage aufzulösen;
einen Programmcode zum Erzeugen eines unbegrenzten Stroms von Daten durch die Sensoren, wobei die Sensoren um einen geografischen Ort herum eingesetzt sind, um Informationen und Ereignisse zu erfassen;
einen Programmcode zum Empfangen eines Schnappschusses des unbegrenzten Stroms der Daten, wobei der Schnappschuss dem durch die Sensoren erfassten Datensatz zugeordnet ist.

**Revendications**

1.  Procédé de fourniture de données nécessaires à la résolution d'une requête, le procédé comprenant les étapes ci-dessous consistant à :

    recevoir un ensemble de données capturé par une pluralité de capteurs, dans lequel l'ensemble de données est reçu sur la base d'un ensemble de règles prédéfinies ;
    créer un espace pour stocker l'ensemble de données dans une fenêtre (404), parmi une pluralité de fenêtres, de la base de données, en supprimant des données pré-stockées de la fenêtre, dans lequel les données pré-stockées sont supprimées à l'arrivée de l'ensemble de données, et dans lequel les données pré-stockées sont stockées dans un référentiel après suppression des données de la fenêtre ;
    recevoir la requête en provenance d'un utilisateur (406), dans lequel la requête correspond à l'une parmi une requête enregistrée et une requête *ad hoc,* dans lequel la requête *ad hoc* est reçue en temps réel en provenance de l'utilisateur ;
    déterminer les données sur la base de la requête (408), dans lequel les données comprennent l'ensemble de données et une partie de l'ensemble de données pré-stocké ou l'ensemble de données pré-stocké, dans lequel une taille de la fenêtre est adaptée de manière dynamique sur la base des données à fournir à la requête ;
    redimensionner la fenêtre (410) en vue de fusionner la partie de l'ensemble de données pré-stocké ou l'ensemble de données pré-stocké avec l'ensemble de données, ce qui permet de générer par conséquent une fenêtre redimensionnée, dans lequel la fenêtre est redimensionnée lorsque la requête est la requête enregistrée ;
    sélectionner une fenêtre de taille maximale (412) présentant une taille maximale parmi la pluralité de fenêtres, dans lequel la fenêtre de taille maximale est sélectionnée lorsque la requête est la requête *ad hoc ;*
    générer un flux de données libre par le biais de la pluralité de capteurs (108) ;
    dans lequel la pluralité de capteurs est déployée autour d'un emplacement géographique en vue de capturer des informations et des événements ;
    recevoir un instantané du flux de données libre, dans lequel l'instantané est associé à l'ensemble de données capturé par la pluralité de capteurs.

2.  Procédé selon la revendication 1, dans lequel l'étape de réception de l'ensemble de données comprend en outre les étapes ci-dessous consistant à :

    extraire des métadonnées d'un référentiel externe, dans lequel les métadonnées sont associées à l'ensemble de données ; et
    unifier l'ensemble de données et les métadonnées dans un format unifié, en utilisant un algorithme d'unification de données.

3.  Procédé selon la revendication 2, dans lequel les métadonnées comprennent des données géospatiales et des données de profil d'une personne.

4.  Procédé selon la revendication 2, dans lequel l'ensemble de données et les métadonnées sont unifiés en utilisant au moins une technique parmi une technique d'extraction d'informations, une technique d'apprentissage automatique et une technique de traitement de langage naturel.

5.  Procédé selon la revendication 1, dans lequel les données pré-stockées sont stockées dans un référentiel sur la base d'une priorité associée aux données pré-stockées, dans lequel la priorité est associée en utilisant une pluralité de paramètres de priorité, et dans lequel la pluralité de paramètres de priorité comprend une source de données, un motif de données, une logique de la requête et un volume des données.

6.  Système destiné à fournir des données nécessaires à la résolution d'une requête (102), le système comprenant :

    un processeur (202) ; et
    une mémoire (206) couplée au processeur, dans lequel le processeur est en mesure d'exécuter une pluralité de modules stockés dans la mémoire, et dans lequel la pluralité de modules comprend :

    un module de réception de données (212) configuré de manière à recevoir un ensemble de données capturé par une pluralité de capteurs, dans lequel l'ensemble de données est reçu sur la base d'un ensemble de règles prédéfinies ;
    un module de gestionnaire de logique (214) configuré de manière à :

créer un espace pour stocker l'ensemble de données dans une fenêtre, parmi une pluralité de fenêtres, de la base de données, en supprimant des données pré-stockées de la fenêtre, dans lequel les données pré-stockées sont supprimées à l'arrivée de l'ensemble de données, et dans lequel les données pré-stockées sont stockées dans un référentiel après suppression des données de la fenêtre ;

recevoir la requête en provenance d'un utilisateur (406), dans lequel la requête correspond à l'une parmi une requête enregistrée et une requête *ad hoc,* dans lequel la requête *ad hoc* est reçue en temps réel en provenance de l'utilisateur ;

un module de gestionnaire de fenêtre (216) configuré de manière à :

déterminer les données sur la base de la requête, dans lequel les données comprennent l'ensemble de données et une partie de l'ensemble de données pré-stocké ou l'ensemble de données pré-stocké, dans lequel la taille de la fenêtre est adaptée de manière dynamique sur la base des données à fournir à la requête ;

redimensionner la fenêtre en vue de fusionner la partie de l'ensemble de données pré-stocké ou l'ensemble de données pré-stocké avec l'ensemble de données, ce qui permet de générer par conséquent une fenêtre redimensionnée, dans lequel la fenêtre est redimensionnée lorsque la requête est la requête enregistrée ;

un module d'apprentissage (218) configuré de manière à sélectionner une fenêtre de taille maximale présentant une taille maximale parmi la pluralité de fenêtres, dans lequel la fenêtre de taille maximale est sélectionnée lorsque la requête est la requête *ad hoc ;*

un module de facilitation de données (220) configuré de manière à fournir les données dans l'une parmi la fenêtre redimensionnée et la fenêtre de taille maximale, en vue de résoudre la requête ;

dans lequel le processeur est configuré de manière à générer un flux de données libre par le biais de la pluralité de capteurs, dans lequel la pluralité de capteurs (108) est déployée autour d'un emplacement géographique en vue de capturer des informations et des événements ; et

dans lequel le processeur est configuré de manière à recevoir un instantané du flux de données libre, dans lequel l'instantané est associé à l'ensemble de données capturé par la pluralité de capteurs.

**7.** Support non transitoire lisible par ordinateur incorporant un programme exécutable dans un dispositif informatique pour fournir des données nécessaires à la résolution d'une requête, le programme comprenant :

un code de programme pour recevoir un ensemble de données capturé par une pluralité de capteurs (402), dans lequel l'ensemble de données est reçu sur la base d'un ensemble de règles prédéfinies ;

un code de programme pour créer un espace pour stocker l'ensemble de données dans une fenêtre (404), parmi une pluralité de fenêtres, de la base de données, en supprimant des données pré-stockées de la fenêtre, dans lequel les données pré-stockées sont supprimées à l'arrivée de l'ensemble de données, et dans lequel les données pré-stockées sont stockées dans un référentiel après suppression des données de la fenêtre ;

un code de programme pour recevoir la requête en provenance d'un utilisateur (406), dans lequel la requête correspond à l'une parmi une requête enregistrée et une requête *ad hoc,* dans lequel la requête *ad hoc* est reçue en temps réel en provenance de l'utilisateur ;

un code de programme pour déterminer les données sur la base de la requête (408), dans lequel les données comprennent l'ensemble de données et une partie de l'ensemble de données pré-stocké ou l'ensemble de données pré-stocké, dans lequel la taille de la fenêtre est adaptée de manière dynamique sur la base des données à fournir à la requête ;

un code de programme pour redimensionner la fenêtre (410) en vue de fusionner la partie de l'ensemble de données pré-stocké ou l'ensemble de données pré-stocké avec l'ensemble de données, ce qui permet de générer par conséquent une fenêtre redimensionnée, dans lequel la fenêtre est redimensionnée lorsque la requête est la requête enregistrée ;

un code de programme pour sélectionner une fenêtre de taille maximale (412) présentant une taille maximale parmi la pluralité de fenêtres, dans lequel la fenêtre de taille maximale est sélectionnée lorsque la requête est la requête *ad hoc ;*

un code de programme pour fournir les données (414) dans l'une parmi la fenêtre redimensionnée et la fenêtre de taille maximale afin de résoudre la requête ;

un code de programme pour générer un flux de données libre par le biais de la pluralité de capteurs, dans lequel la pluralité de capteurs est déployée autour d'un emplacement géographique en vue de capturer des informations et des événements ;

un code de programme pour recevoir un instantané du flux de données libre, dans lequel l'instantané est associé à l'ensemble de données capturé par la pluralité de capteurs.

**FIGURE 1**

**SYSTEM (102)**

**PROCESSOR(S) (202)**  **INTERFACE(S) (204)**

**MEMORY (206)**

**MODULES (208)**

DATA RECEIVING MODULE (212)

LOGIC MANAGER MODULE (214)

WINDOW MANAGER MODULE (216)

LEARNING MODULE (218)

DATA FACILITATING MODULE (220)

OTHER MODULES (222)

**DATA (210)**

REPOSITORY (224)

OTHER DATA (226)

**FIGURE 2**

FIGURE 3

**FIGURE 3(a)**

400

402

RECEIVING A DATASET CAPTURED BY A PLURALITY OF
SENSORS

404

CREATING A SPACE FOR STORING THE DATASET IN A WINDOW
OF A PLURALITY OF WINDOWS

406

RECEIVING A QUERY FROM A USER

408

DETERMINING THE DATA BASED UPON THE QUERY

410

RESIZING THE WINDOW WHEN THE QUERY IS THE REGISTERED
QUERY

412

SELECTING A MAXIMUM SIZE WINDOW HAVING A MAXIMUM
SIZE AMONGST THE PLURALITY OF WINDOWS WHEN THE
QUERY IS THE AD-HOC QUERY

414

PROVIDING THE DATA IN ORDER TO RESOLVE THE QUERY

FIGURE 4

**EP 3 061 009 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2275954 A1
- EP 2474922 A2